# EUROPEAN PATENT SPECIFICATION

(11) **EP 2 482 277 B1**
(45) Date of publication and mention of the grant of the patent: **24.06.2015**
(21) Application number: 10823678.7
(22) Date of filing: 03.11.2010
(51) Int. Cl.: G10L 17/02, G10L 17/06, G10L 17/20, G10L 25/15

(54) **Method for identifying a speaker using formant equalization**
Verfahren zur Identifizierung eines Sprechers unter Verwendung der Formantenentzerrung
Procédé d'identification d'un locuteur basé sur l'égalisation des formants

(30) Priority: 24.09.2009 RU 2009136387
(43) Date of publication of application: 01.08.2012
(73) Proprietor: SPEECH TECHNOLOGY CENTER LIMITED, St. Petersburg, 196084 (RU)
(72) Inventor: KOVAL, Sergey Lvovich, St.Petersburg 191187 (RU)
(74) Representative: KATZAROV S.A.
(86) International application number: PCT/RU2010/000661
(87) International publication number: WO 2011/046474

(56) References cited:
- EP-A2- 0 825 587
- WO-A2-00/77772
- RU-C1- 2 107 950
- RU-C2- 2 230 375
- US-A- 5 313 556
- US-A1- 2005 171 774
- TANABIAN M M ET AL: "Automatic speaker recognition with formant trajectory tracking using CART and neural networks", ELECTRICAL AND COMPUTER ENGINEERING, 2005. CANADIAN CONFERENCE ON SASKATOON, SK, CANADA MAY 1-4, 2005, PISCATAWAY, NJ, USA,IEEE, PISCATAWAY, NJ, USA, 1 May 2005 (2005-05-01), pages 1225-1228, XP010869025, DOI: 10.1109/CCECE.2005.1557198 ISBN: 978-0-7803-8885-7

## Description

### TECHNICAL FIELD

The invention relates to the field of speaker voice recognition, particularly to automatic, automated, and expert methods for identification of a speaker from audio records of spontaneous oral speech. The methods are intended for, but not limited to, forensic examination.

Practical investigations, particularly forensic examination and the comparison of audio records of oral speech to identify a speaker, are known in some cases to make decisions difficult by presenting obstacles to expert evaluation. Such obstacles may include short duration and low quality of the examined audio records, different psycho-physiological states of the speakers in the compared audio records, different contents and languages of the speech, different types and levels of audio channel noise and distortion, etc.

Therefore, it is desirable to provide methods for identification of a speaker from audio records of spontaneous oral speech, the methods being applicable for, but not limited to, forensic examination and taking into account the above-mentioned problems. In particular, it is desirable to provide methods allowing identification of a speaker from short speech audio records recorded through various audio recording channels, with high noise and distortion levels, as well as from audio records with speakers in different psycho physiological states, with different verbal content of speech, or speech in different languages.

### PRIOR ART

It is known a method for identification of a speaker from audio records, wherein the speaker's characteristics are extracted from certain single-type phrases uttered by the speaker (DE 2431458, 05.02.1976).

This method comprises filtering a speech signal through a comb of 24 bandpass filters, detecting the signal, smoothing the signal, and inputting the signal through an analog-digital converter and a switch into a digital processing device, in which individualizing features associated with the integral speech spectrum are automatically recognized and stored.

However, this method cannot be used with audio records of oral speech obtained in high distortion and noise environment because the method fails to provide a sufficient number of individualizing features. Furthermore, this method has not proved to be sufficiently reliable for identification because it requires use of audio records comprising identical verbal content for both a verified speaker and an unknown speaker.

It is known a method for identification of an individual audio record by a voice input which is compared with a previously stored voice signature of that individual. The identification is based on singling out and comparing single-type keywords from the records under analysis (US 3,466,394).

This method comprises subjecting a speech signal to short-term spectral analysis, and then determining the spectrum and the primary voice tone contours versus time. The resulting contours are regarded as individualizing features. Identification of a speaker is based on a comparison of the audio record contours of audio records obtained from a verified speaker and an unknown speaker.

The weak point of this method is that the result of identification is dependent on the quality of audio records obtained in high distortion and noise environment. Besides, this method has a high percentage of identification failures because it requires audio records of a verified speaker and an unknown speaker with the same words.

It is known a method for identification of a speaker based on spectral-band-temporal analysis of spontaneous oral speech (G.S. Ramishvili, G.B. Chikoidze Forensic examination of audio records and identification of a speaker. Tbilisi: "Mezniereba", 1991, p. 265).

To eliminate the dependence of the identification results on the speech semantics, sonorous speech elements are singled out from the speech signal, and their energy values for high formants are averaged over their lifetime in each of 24 spectral filters. The primary tone is determined based on singling out the fundamental component of the signal in the spectrum. The speech rate is determined as well.

The aforementioned parameters are used as individualizing features.

However, this method fails with audio records obtained in environments of high sound distortion in audio recording channel and different states of speakers due to that the individualizing features cannot be reliably singled out.

It is known a device and a method for speaker recognition based on construction and comparison of purely statistical models for cepstral speech signal features of known and unknown speakers (US 6,411 ,930).

The speaker recognition is performed using Discriminative Gaussian mixture models.

This method, like most purely statistical approaches to speaker recognition, fails for very short (1 to 10 seconds) voice messages as well as the situations where the speakers' states and/or audio record recording channels possess strongly different properties, or the speakers are in different emotional states.

It is known a method for speaker recognition using only stochastic approach (US 5,995,927).

According to the method, speaker recognition is performed by constructing and comparing feature description covariance matrices of an input speech signal and reference speech signals of known speakers.

This method also fails with short (5 seconds or less) voice messages, and is very sensitive to significant signal power reduction in particular segments of the speech frequency range due to ambient noise as well as poor quality of microphones and channels for sound transmission and recording.

It is known a speaker adaptable method for recognition of isolated words (RU 2047912). The method is based on sampling an input speech signal, pre-emphasising the speech signal, successively segmenting the speech signal, coding the segments with discrete elements, calculating the energy spectrum, measuring formant frequencies and determining amplitudes and energies in different frequency bands of the speech signal, classifying articulatory events and states, defining and grading word samples, calculating intervals between the word samples to actualize the word recognized, recognizing the word or failing to recognize, and supplementing the sample dictionary when adapting to the speaker. The input speech signal is pre-emphasised in the time domain by smoothing/ differentiation. The energy spectrum is quantized depending on the noise variance of the communication channel. Formant frequencies are determined by finding the global maximum of the logarithmic spectrum and by subtracting a pre-determined frequency-dependent function from the aforementioned spectrum. When grading articulatory events and states, the proportions of periodic and noise excitation sources are determined as compared with the threshold value of square-wave pulse sequence autocorrelation coefficients in multiple frequency bands. The beginning and the end of articulatory movements and their corresponding acoustic processes are determined against the threshold value of the likelihood function from the autocorrelation coefficients, the formant frequencies and the energies in given frequency bands. The speech signal is divided into intervals between the beginning and the end of acoustic processes corresponding to specific articulatory movements and sequentially, starting with vowels. A segment is recognized only when its left and right boundary transition types match each other, while the segmentation is finished when pauses between words in the left and right time segments have been recognised. Word samples are formed as matrices with binary feature likelihood values, and recognition fails when the normalized interval difference between the unknown actualization and the nearest two samples that belong to different words is smaller than the set threshold value.

The disadvantage of this known speaker adaptable method for isolated word recognition is its poor distinction when recognizing speakers by spontaneous speech, since in most cases the method does not distinguish between speakers of the same sex transferring a verbal message with the same verbal contents.

It is known a security system based on voice recognition (US 5,265,191), which requires both the trainer and the unknown speaker to repeat at least one voice message. The system compares parametric representations of repeated voice messages made by the unknown speaker and the known speaker and establishes the identity of the speakers compared only if every message pronounced by the unknown speaker is close enough to that made by the trainer, indicating failure if their representations strongly differ from each other.

The weak point of this system is its poor resistance to variable noises (vehicle and street noise, industrial premises) as well as the mandatory requirement for both speakers to pronounce one and the same voice message.

It is known a method for automatic identification of a speaker by the peculiarities of the password phrase pronunciation (RU 2161826). The method comprises breaking the speech signal into voiced zones and defining time intervals within the aforementioned zones - at the speech signal intensity maxima, as well as at the beginning of the first voiced zone and at the end of the last voiced zone. For the defined time intervals, speech signal parameters are determined and compared with samples formed with due regard for mathematical expectations and acceptable variations of the parameters. In doing so time intervals are defined at the end of the first zone, at the beginning of the last voiced zone, and at the beginning and at the end of the other zones; and the duration of the time intervals is set as a multiple of the speech signal primary tone period. Correlation coefficients of the speech signal parameters are evaluated, the correlation coefficients being further taken into account sample when forming the samples. Identification of a speaker is based on the obtained speech signal parameters and corresponding statistical characteristics.

The disadvantage of this known method is its poor noise resistance, since it requires determining the exact position of the boundaries of the voice primary tone period in the input speech signal, which is often hardly possible under acoustic and electromagnetic interference (office and street noise, speech channel interference, etc.). Besides, speakers have to pronounce the same voice passwords, which cannot always be achieved in practice.

It is known a speaker verification device based on the "nearest neighbour" distance measurement (US 5,339,385), including a display, a random hint generator, a speech recognition unit, a speaker verifier, a keyboard and a primary signal processor, with the input of the primary signal processor being the input of the device and its output connected to the first input of the speech recognition unit and the first input of the speaker verifier. The first output of the hint generator is connected to the second input of the speech recognition unit, the output of which is connected to the display. The keyboard is connected to the third input of the speech recognition unit and the third input of the speaker verifier, the output of which is the output of the device. To establish the similarities or differences in voice passwords pronounced, the speaker verifier breaks the input speech signal into separate analysis frames, calculates non-parametric speech vectors for each analysis frame and further determines proximity of thus obtained speech signal descriptions of the compared pronunciations on the basis of Euclidean distance to the nearest neighbour.

The disadvantage of this speaker verification device is its poor noise resistance in office and street environments due to use of non-parametric speech vectors and Euclidean metrics in determining the degree of similarity / difference in a voice password pronunciations, as well as low recognition reliability (large share of false failures) due to use of voice passwords with different word order. Such low reliability is caused by inevitable individual variability of pronouncing the same words in different contexts, even by the same speaker. Besides, it is hardly possible to secure pronunciation of the prompted verbal content by both speakers compared.

It is known a method for speaker recognition (US 6,389,392), wherein the method comprises comparing an input speech signal obtained from an unknown speaker with speech samples of previously known speakers, of which at least one is represented by two or more samples. Successive input signal segments are compared to successive sample segments to obtain a measure of proximity of the compared input speech signal segment and the sample speech signal segment. For each sample of a known speaker with at least two samples, a composite comparison result of the sample and the input speech signal is formed based on the selection, for each segment of the input speech signal, of the closest segment of the compared sample in terms of the used measure of proximity. Then the unknown speaker is recognised on the basis of the composite comparison results of the input speech signal and the sample.

This known method for speaker recognition is limited in practical application, as the requirement for at least two samples for each verbal message uttered by a known speaker is not always feasible in the actual environment. Besides, this method does not guarantee high reliability of speaker recognition in the acoustic noise environment of a real office, street or vehicle, or with different emotional states of the speakers, as the segment by segment parametric speech signal description is subject to strong influence of additive acoustic noise and natural variability of speech. In addition, the low reliability of the method in high noise environment arises out of the fact that the closest sample segment in terms of the used measure of proximity is to be found for each segment of the input speech signal, which entails a large number of pure noise segments corresponding to speech pauses segments both in the sample and the input speech signal.

It is known a method for speaker recognition from audio records of spontaneous oral speech (RU 21 07950). The method is based on using spectral-band-temporal analysis of speech signals, determining peculiarity characteristics of an individual's speech and comparing them with samples using acoustic integral features as the peculiarity characteristics. The acoustic integral features are estimates of parameters of statistical distribution of the current range components and the primary tone period and frequency distribution histograms. The parameters are measured on audio records with both spontaneous and fixed contexts. Among the acoustic integral features, the most informative features for a given speaker, not influenced by the noise and distortion present in the audio records, are selected in the course of the adaptive re-training. Also used are linguistic features (fixed or spontaneous ones), detected by an expert in the course of the audio record auditory analysis using an automated bank comprising reference voice samples of oral speech dialects, accents, and defects.

This method loses its reliability for speakers with short audio records, speaking different languages or being in substantially different psycho-physiological states because of employing an integral approach, averaging the speech signal characteristics, and linguistic analysis.

It is known a method for speaker recognition (RU 2230375) with the largest number of common features with the claimed method and selected as a closest prior art. The method of RU 2230375 includes a segment by segment comparison of the input speech signal with samples of voice passwords pronounced by known speakers, and assessment of similarity between a first audio record of the speaker, and a second, or sample, audio record by matching formant frequencies in reference fragments of speech signal, wherein the fragments for comparison are selected from the first audio record and the second, or sample, audio record.

The known method identifies formant vectors of consecutive segments and statistical characteristics of the power spectra of the input speech signal and of the sample speech signals. The formant vectors and the statistical characteristics are further compared with formant vectors of successive segments of each sample and with statistical characteristics of the power spectrum of the sample speech signal, respectively, to form composite comparison metrics for the input and the sample signals. A weighted modulus of formant vector frequency difference is used as a measure of proximity of formant vector in segments.

To calculate a composite comparison metrics for the input signal and sample, each input speech signal segment is given the closest sample segment in terms of the corresponding measure of proximity with the same number of formants. The composite metrics include a weighted average of the measure of proximity between a given input speech signal segment and the closest sample segment for all used input speech signal segments, as well as a cross-correlation coefficient of the statistical characteristics of the power spectra of the input speech signal and the sample. Speaker recognition is based on the outcome of the comparison of the input speech signal and the sample using the composite metrics.

This method does not provide reliable speaker recognition when the phonic structure of the input speech signal differs strongly from that of the speech signal samples (e.g. short messages, different languages of the input signal and the samples), as well as in case of significant differences in the properties of record channels and differences in psycho-physiological state of the speakers in the audio records compared. These shortcomings arise, to begin with, out of the use of the power spectrum statistical characteristics as a component of the composite metrics, since the statistical characteristics strongly depend on the record channel properties, the state of the speaker and the phonic structure of the message, , and out of the segmental measure of proximity in the form of a weighted average for all used segments of the speech signal processed, which leads to averaging segment comparison errors and underestimating the influence of large inter-segment deviations, indicating the difference between the speakers even when there is a small average segment difference observed.

Further prior art examples are found in US 2005/171774 A1 (2005-08-04), TANABIAN M M ET AL: "Automatic speaker recognition with formant trajectory tracking using CART and neural networks", IEEE CANADIAN CONFERENCE ON ELECTRICAL AND COMPUTER ENGINEERING, 2005, SASKATOON, SK, CANADA, MAY 1-4, 2005, pages 1225-1228, and EP 0 825 587 A2 (1998-02-25).

### SUMMARY OF THE INVENTION

An aim of this invention, as defined by the appended claims, is to provide a method for identification of a speaker from audio records of spontaneous oral speech, wherein fragments of speech signal are selected for comparison and individualizing features and methods of comparison thereof are used for recognizing the speaker, allowing reliable speaker identification for most practical cases, in particular for both long and short audio records to be compared, for audio records recorded in different channels having a high level of noise and distortion, for records of spontaneous oral speech of speakers in different psycho-physiological states and/or of different languages, in order to more widely apply the method, including its use in forensic examination.

This aim is achieved by providing a method for speaker identification from audio records of oral speech, comprising evaluation of similarity between a first audio record of the speaker and a second, or sample, audio record by a match of formant frequencies in reference fragments of speech signal, selected for comparison from the first audio record and from the second, or sample, audio record. The invention is characterized by selecting reference fragments of speech signals from the first audio record and from the second audio record, such that the reference fragments comprise formant trajectories of at least three formant frequencies; comparing among themselves selected reference fragments from the first and from the second audio records that comprise at least two matching formant frequencies; evaluating similarity of the compared reference fragments from the match of the other formant frequencies, wherein similarity of the audio records is determined in general from the overall evaluation of all the compared reference fragments.

This method is based on the experimental evidence that low-frequency vocal tract resonances (formants) of an individual change their frequency in a mutually concordant manner with the change of articulation. In particular, this is true for the first 3 - 5 resonance frequencies, depending on the vocal tract length. If the frequency of at least one of the first four formants is changed, then, in most practical cases, one or more other low-frequency formants of the speaker are sure to change their frequency as well. This change is caused by the acoustic relationship between vocal tract resonances and the anatomically restricted possibility to make any changes in the transverse area of the speaker's vocal tract. The theoretical grounds of this fact may be found in the research literature (G. Fant, Acoustic theory of speech production. - Moscow: Nauka, 1964; V.N. Sorokin, Theory of speech production. - M.: Radio and Communication, 1985).

Our method involves the use of vocal tract acoustic resonance parameters as speaker's individualizing features when comparing audio records. The resonance parameters are defined as characteristic frequencies in the formant trajectories that determine the perceived quality of each speech audio record.

These features are noise resistant for audio records recorded in high noise and signal distortion environment.

It has been found experimentally that the presence of three or more formant trajectories within a spectrogram of a reference fragment, in most cases, allows unambiguous determination of characteristic values of formant frequencies and, by comparing them, the reliable identification of the speakers.

To provide additional noise resistance of the defined features in an additive broadband noise environment, formant frequency values for each selected reference fragment are calculated as the average values for fixed durability time intervals in which the formant frequencies are relatively invariable.

At this point, specific fixed formant frequency values related to a predetermined time interval are used for comparison in each reference fragment of the speech signal. The fixed formant frequency values are referred to as formant vectors.

To ensure reliability of identification, it is reasonable to compare reference fragments in which the frequency values of the first two formants match, the frequency values being within the standard variation of formant frequencies for the selected type of sound from a fixed set of vowel-like sounds.

When comparing audio records, reference fragments are compared with each other if they correspond to speech signal segments in audio records that actualize comparable articulatory events, i.e. if the pronounced sounds have highly discernible signal resonance structures with two or more matching resonance frequencies (formants), regardless of the particular phonemes in the speech message they correspond to. These segments are found in speech fragments where speakers pronounce both identical and different phonemes.

Such fragments compared in accordance with formant values are known, according to expert work, as fragments of equal formants.

To come to a general overall identification solution, at least two reference speech signal fragments are selected in the audio records, such that the selected fragments are related to sounds of a maximum difference articulation with the maximum and the minimum frequency values of the first and the second formants for a given audio record.

To ensure high reliability of the identification, reference fragments are compared for several sounds articulated as differently as possible, i.e. for most different embodiments of the vocal tract geometry.

Comparing speech fragments of equal formants, which correspond to different, not necessarily identical sounds, allows identification of the speaker in audio records with substantially different phonic content, in particular, long and short audio records, audio records made by speakers in different psycho-physiological states, as well as the speakers of the same or different languages.

To ensure high reliability of speaker identification with the speech signal distorted badly due to substantially irregular frequency response of audio channels that is different for the compared audio records, it is advantageous, before calculating the formant frequency values, to subject the power spectrum of the speech signal of each audio record to inverse filtering. In the course of the inverse filtering, the time average for each frequency component of the power spectrum is calculated, at least for some fragments of the audio record, and then the original value of the power spectrum of the audio record signal for each frequency spectrum component is divided by its inverse (inverted) mean value.

Spectrum division can also be substituted for the inverse filtering by taking the logarithm of the spectra and subtracting the logarithm of the average spectrum power for each frequency component from the logarithm of the spectrum power of the original audio record signal.

The invention is disclosed in greater details below by an example embodiment with reference to accompanying drawings.

### BRIEF DESCRIPTION OF DRAWINGS

Figure 1 - an example spectrogram with the [te] syllable formant trajectories overlaid.
Figure 2-3 - example comparisons of spectrograms with formant trajectories of matched speakers overlaid for the [e]-type sounds.
Figure 4 - an example comparison of spectrograms with formant trajectories of matched speakers overlaid for the [e]-type sounds.
Figure 5 - an example comparison of spectrograms with formant trajectories of mismatched speakers overlaid for the [e]-type sounds.
Figure 6 - an example comparison of three spectrograms of one and the same speaker's speech signal (reference fragment with the [na] syllable) before and after inverse filtration.
Figure 7 - an example comparison of average power spectra of speech signal for the three spectrograms in Figure 6.
Figure 8 - an example comparison of formant vector spectra, defined in the spectrograms shown in Figure 6.

### DETAILED DESCRIPTION OF THE INVENTION

The claimed method comprises comparing at least two audio records of spontaneous oral speech. Particularly, for forensic examination, one of the audio records may be an audio record of a speaker to be verified, whereas the other of the audio records may be an audio record of an unknown person (a sample record). The purpose of such examination is to establish identity or difference of the persons whose voices were recorded into the audio records to be compared.

The compared audio records are converted into digital form and their digital images are stored in a PC memory as digital audio signal files.

The digital images are subjected to spectral analysis using a PC, in accordance with generally accepted signal spectral analysis procedures (S.L. Marple, Digital spectral analysis and its applications, Mir, 1990), have their dynamic spectrograms plotted and used to calculate formant trajectories as sequential time modification lines of vocal tract resonant frequencies, displayed in the spectrograms as local spectrum maxima. Formant frequencies are corrected, if necessary, by being placed over a spectrogram, with the apparent differences in the formant movement rectified.

Reference fragments from which the formant frequencies are to be compared, are selected from the spectrograms of the first and of the second compared audio records.

Formant frequencies themselves are influenced by many random factors at the moment of pronouncing certain sounds, which accounts for their "disappearing" from some segments, and "trembling" from segment to segment. Besides, as vocal tract geometry is constantly changing in the course of speech delivery, the formant frequencies keep moving smoothly from one value to another, forming formant trajectories. At the same time, comparing formant frequencies requires selecting certain fixed values thereof for each reference fragments of speech signal.

To ensure that this condition is met, the formant frequencies used for comparing reference fragments and audio records are selected in this embodiment of the identification method as follows.

At first, reference fragments meeting the following two criteria are selected from the spectrograms of the first and of the second audio records:
(1) - the reference fragment contains formant trajectories of three or more formants;
(2) - the frequency values of the first two formants of the aforementioned formant trajectories are within the formant frequency standard variation for one of the predetermined types of sound from a fixed set of vowel-like sounds.

It has been found experimentally that the frequency range of the telephone channel requires, as a rule, four formant trajectories in the selected reference fragment for male speakers and three for female speakers.

Then, formant vectors are selected in each selected reference fragment for subsequent comparison of formant frequencies; the values of the formant frequencies are calculated as an average over fixed duration time intervals in which the formant frequencies are relatively invariable.

The use of formant vectors to compare formant frequencies within each reference fragment allows selecting from the set of "trembling" and sometimes "disappearing" formant values those segments where interpolated and smoothed in time and in frequency formant frequencies form segments of relatively stable values that are suitable for reliable detection and subsequent comparison. This provides additional noise resistance of individualizing features in an additive broadband noise environment.

It has been found experimentally that the presence of three or more formant trajectories within the spectrogram of a reference fragment in most cases allows unambiguous determination of values of formant frequencies for at least one formant vector within the reference fragment. This provides reliable identification of speakers in the course of further comparison.

The duration of the reference fragment is determined by the boundaries of the speech signal segment for which the formant trajectories are unambiguously determined for those formants, which are then used to determine the formant vectors. Lengthy speech signal segments that are significantly heterogeneous in their phonic structure, suitable for use as reference fragments, are divided into several reference fragments, each of whose first two formants, as a rule, do not exceed the typical limits of formant frequency variation for one vowel phoneme type in the corresponding language.

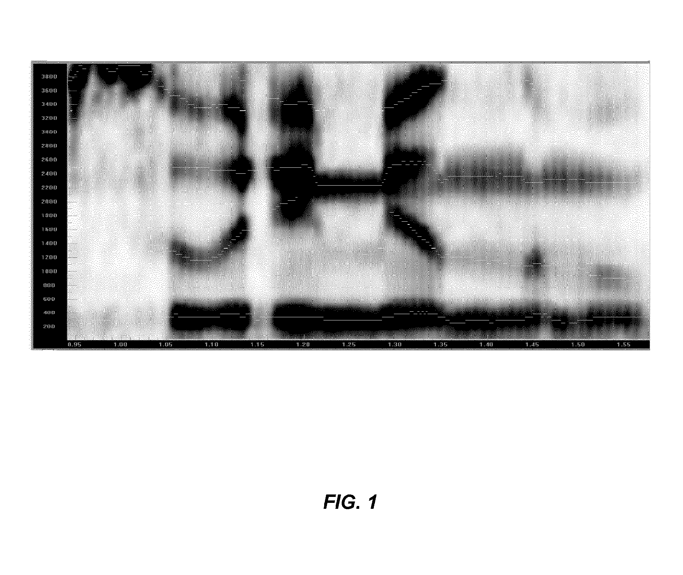

An example of such spectrogram with overlaid formant trajectories is shown in Figure 1.

The spectrogram shown in Figure 1 is the spectrogram of syllable [te] pronounced by a male speaker. The horizontal axis represents time in seconds. The vertical axis represents frequency in Hz. The spectrogram blackening intensity represents the signal power at the corresponding point of time and frequency. The thin black lines represent automatically selected formant frequencies forming formant trajectories.

The vertical lines mark the boundaries of the singled out reference fragment and the formant vector selected for comparison. A formant vector is a narrow interval within a reference fragment within which the formant frequency value is relatively invariable.

Horizontal cursors mark the position of formant frequencies. The spectrogram in Figure 1 shows them as approximately equal to 430, 1'345, 2'505, and 3'485 Hz.

Having selected the reference fragments for the compared speech signals from the first and from the second audio records and having defined the formant vectors within said reference fragments, for each reference fragment and formant vector of the first audio record, a reference fragment and a corresponding formant vector are selected for comparison from the second audio record, so that the vectors to be compared have matching formant frequency values for at least two formants. If this is impossible, the reference fragments are considered non-comparable and not further compared.

Such choice of reference fragments and formant vectors to be compared corresponds to the selection and comparison of speech signal segments in the first and in the second audio records, where comparable articulatory events are actualized, i.e. the speakers pronounce sounds with highly discernible resonance structure of the signal spectrum and the frequencies of two or more resonances (formants) match regardless of the phoneme pronounced by the speakers.

As it was mentioned above, such fragments comparable in terms of some formant frequency values are referred to in expert literature as fragments of equal formants. These fragments of equal formants are found in speech segments where speakers pronounce both identical and different phonemes. For example, there can be a static vowel pronunciation fragment selected as a reference fragment for comparison in the first audio record and, in the second audio record, a fragment can be selected with a fast transition from one phoneme to another with a segment where at least two formant frequency values match the corresponding formant frequency values of the static vowel in the first audio record.

Formant frequency match, or failure to match, often follows the known threshold method. The threshold values of acceptable deviation depend on the quality of the signal recorded in a particular audio record (the signal / noise ratio, the type and intensity of noise and distortion, physical and psycho-physiological state of the speaker), and are determined on the basis of the natural formant frequency variability for each speaker within a given audio record, for given type of sounds, and for each formant separately. This variability and the corresponding thresholds are determined, for example, by searching and mutually comparing reference fragments and formant vectors within the audio record, that is, for speech signals of each of the audio records.

Among the segments of equal formants, formant frequencies of the remaining, i.e. not equal, formants are compared. Match or mismatch of the values of these frequencies determines match or mismatch between the compared reference fragments (certain speech fragments). For example, in typical practical cases a 3% deviation is considered acceptable, and 10% - unacceptable.

If the vector formant frequencies match, the speakers are considered identical for this type of sounds. This situation demonstrates that the compared speakers have identical vocal tract geometry characterized by acoustic resonances when pronouncing this type of sounds in the compared time periods.

Match or mismatch decision for fragments of equal formants of audio records is taken for each selected reference fragment of the first audio record. Making an informed decision requires comparing several (usually 3-5) reference fragments for each type of sound with formant frequencies of the reference fragment corresponding to a given type of sound.

If, for the selected reference fragment of the first audio record, a fragment of equal formants is found in the second audio record such that the formant frequencies of corresponding formant vectors of the found fragment fail to match those of the reference fragment in the first audio record, a reverse search is to be done for a fragment of equal formants with the same formant frequencies in the first audio record. Only a failure to find a matching vector can serve as the basis for taking the decision of formant vector mismatch in the two audio records for this type of sound and, therefore, the difference of speakers for this type of fragment. This situation demonstrates that the speakers compared have different vocal tract geometry for comparable articulations characterized by acoustic resonances when pronouncing this type of sound in the compared time periods.

Speaker identification using a selection of fragments of equal formants which correspond to different, not necessarily identical sounds, allows speaker recognition in cases with strongly different phonic content of the audio records. The aforementioned approach secures, above all, speaker identification from short audio records, audio records made by speakers in different psycho-physiological states, as well as speakers of the same or different languages.

The inventor has experimentally shown that ensuring high reliability of male speaker identification in most practical cases requires selecting equal frequencies for three formants and comparing the value of the fourth one. Women's and children's voices also require selecting three equal formants, but since this is not possible in many practical cases it is allowed to select two equal formant frequencies and compare the value of the third one.

Coming to a general overall identification decision requires searching and comparing comparable fragments of equal formants in the audio records to obtain a representative selection of most different articulation types, i.e. for maximum difference between the vocal tract geometries of the compared speakers. Theoretical studies demonstrate that these types of articulation (L.V. Bondarko, L.A. Verbitskaya, M.V. Gordina Basics of General Phonetics. - St. Petersburg: SPSU, 2004, G. Fant Acoustic theory of speech production. - Moscow: Nauka, 1964; V.N. Sorokin. Theory of speech production. - M.: Radio and communication. 1985) correspond to vowels at the top of the so-called "phonetic triangle", i.e. vowel sounds with maximum and minimum first and second formant frequency values for the whole range of changes of the first two formant frequencies.

For example, a representative set for the Russian language typically includes reference fragments of sounds with formant frequencies close to the average values for the vowels of [Λ], [o], [u], [e], [i] type. For the English language - the vowels of A, O, U, E, I type.

For example, in most languages of different types, the formant frequencies of the sounds in a representative set of reference fragments for male speakers should be of the following typical values with a deviation of about +/- 20%.

| Type of the sound | 1 (U) | 2 (O) | 3 (A) | 4 (E) | 5 (I) | 6 (ε) | 7 (¥) | 8 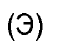 |
|---|---|---|---|---|---|---|---|---|
| First formant F1, Hz | 300 | 430 | 700 | 420 | 300 | 500 | 350 | 500 |
| Second formant F2, Hz | 700 | 1000 | 1300 | 1800 | 2100 | 1650 | 1350 | 1500 |

Advantageously, similar reference fragments in terms of formant frequencies are selected for all types of sounds in the table. In this case several reference fragments for each type of sound are preferably selected. It has been found experimentally that to secure reliable identification decision, for each type of sound it is enough to find 3-4 reference fragments in each of the compared audio records. In general, taking a final overall identification decision requires 4-8 different types of sounds. Thus, it is feasible to use 12-32 reference fragments in the compared audio records, depending on the speech signal quality.

In case of short audio records, the minimum required set of sounds contains reference fragments with formant frequencies close to at least three different types of sounds of the table.

The equal formants selection and formant comparison procedure described above is applied for reference fragments of each type of sounds (usually at least 3), and a particular formant match / mismatch identification decision is taken for each type of sounds. On the basis of a plurality of decisions on reference fragments of equal formants for each type of sounds, a formant frequency match decision is made for a given type of sounds to which the compared reference fragments correspond. The decision is positive if all fragments of equal formants of this type demonstrate a formant frequency match for all formants considered. The decision can be probabilistic if the quality of the audio record is poor and does not allow determining the formant position accurately enough. The decision can be uncertain if the quality and quantity of the speech audio record material is insufficient to provide reliable recognition of fragments and formant vectors therein.

Individual identification decisions for different types of sounds are combined into a general overall identification decision on the identity or difference of the speakers whose speech messages are recorded in the compared audio records.

A definitely positive overall decision is usually made in case of positive individual identification decisions for at least five different sounds with generally at least 15 reference fragments compared and in the absence of negative individual identification decisions ruling out the speakers' identity. A negative identification decision is made if there is at least one definitely negative particular identification decision for one type of sound. The decision can be probabilistic if the quality of the audio record is poor and allows neither singling out of a sufficient number of reference fragments, nor determining accurately enough the positions of the formants.

Implementation of the method is demonstrated by the following examples comparing spectrograms with overlaid formant trajectories for matching and mismatching speakers.

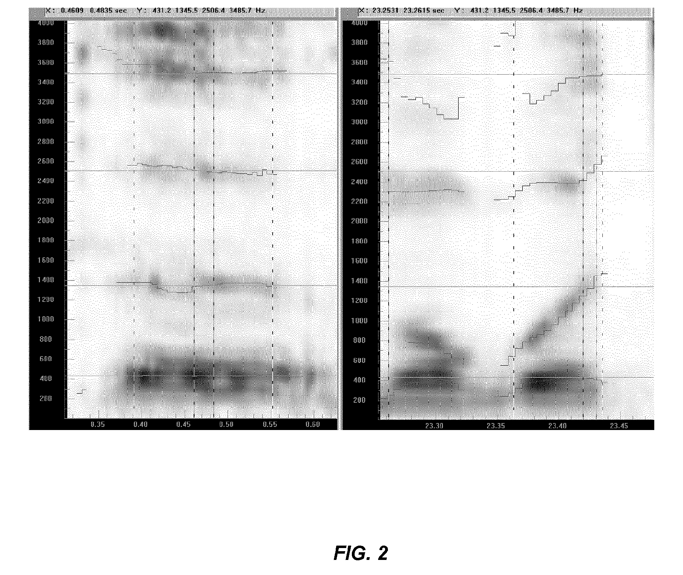

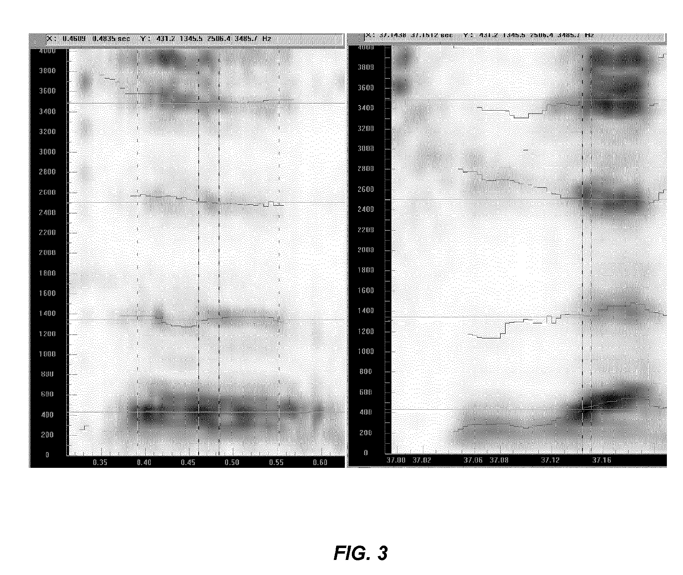

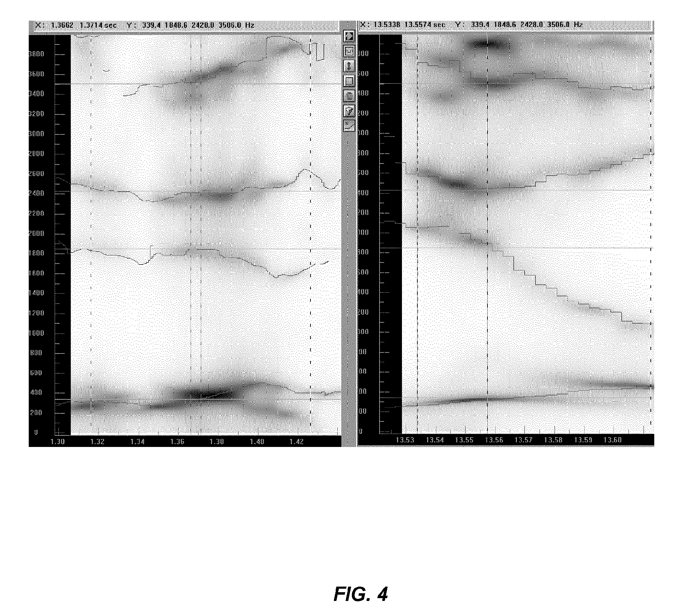

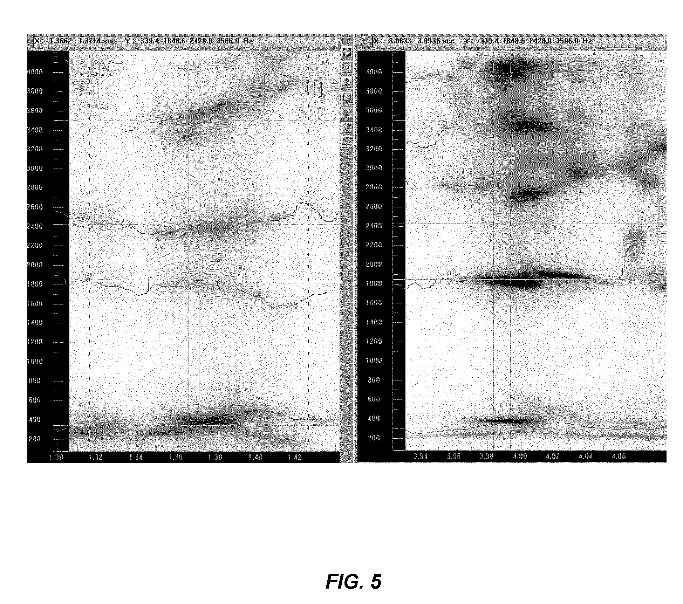

Figures 2-4 show example comparisons for spectrograms with overlaid formant trajectories for matching formant frequencies for the [e]-type sounds (Figures 2,3), for the [e]-type sounds (Figure 4) and for mismatching formant vectors for the [e]-type sounds (Figure 5).

With reference to Figure 2, spectrograms are shown with overlaid formant trajectories for the [e]-type sounds of the [te] syllable (in the left part of the figure) and the word ['mogut] /they can/ (in the right part of the figure) pronounced by the same male speaker. The horizontal axis represents time in seconds. The vertical axis represents frequency in Hz. The spectrogram blackening intensity represents the signal power at the corresponding point of time and frequency. The thin black lines represent automatically selected formant frequencies forming formant trajectories. The vertical lines mark the boundaries of the reference fragments selected for comparison and the formant vectors in them. The horizontal cursors mark the matching position of formant frequencies. They approximately equal 430, 1'345, 2'505 and 3'485 Hz. Different phonemes have matching frequencies in the marked formant vectors (the middle of the tonic [e] and the very end of the post-tonic [U]).

With reference to Figure 3, spectrograms are shown with overlaid formant trajectories for the [e]-type sounds of the [te] syllable (in the left part of the figure) for matching speakers and the central section of the [suda] syllable of the word [gosu'darstvo] /state/ (in the right part of the Figure) pronounced by the same male speaker. The horizontal axis represents time in seconds. The vertical axis represents frequency in Hz. The spectrogram blackening intensity represents the signal power at the corresponding point of time and frequency. The thin black lines represent the automatically selected formant frequencies forming formant trajectories. The vertical lines mark the boundaries of the reference fragments selected for comparison and the formant vectors in them. The horizontal cursors mark the matching position of formant frequencies. They approximately equal 430, 1'345, 2'505 and 3'485 Hz. Different phonemes have matching frequencies in the marked formant vectors (the middle of the tonic [e] and the beginning of the pre-tonic [U]).

With reference to Figure 4, spectrograms are shown with overlaid formant trajectories pronounced by matching speakers for the [e]-type sounds of the [re] syllable of the word [inte'resny] /interesting/ (in the left part of the figure) and the [she] syllable of the word [re'shenije] /decision/ (in the right part of the figure) pronounced by the same male speaker. The horizontal axis represents time in seconds. The vertical axis represents frequency in Hz. The spectrogram blackening intensity represents the signal power at the corresponding point of time and frequency.

The thin black lines represent the automatically selected formant frequencies forming formant trajectories. The vertical lines mark the boundaries of the reference fragments selected for comparison and the formant vectors in them. Horizontal cursors mark the matching position of formant frequencies for tonic [e] phoneme formant vectors. They approximately equal 340, 1'850, 2'430, and 3'505 Hz.

With reference to Figure 5, spectrograms are shown with overlaid formant trajectories pronounced by mismatching speakers for the [e]-type sounds of the [re] syllable of the word [inte'resny] /interesting/ (in the left part of the figure) and the [de] syllable of the word [utverzh'denie] /statement/ (in the right part of the figure) pronounced by different male speakers. The horizontal axis represents time in seconds. The vertical axis represents frequency in Hz. The spectrogram blackening intensity represents the signal power at the corresponding point of time and frequency. The thin black lines represent the automatically selected formant frequencies forming formant trajectories. The vertical lines mark the boundaries of the reference fragments selected for comparison and the formant vectors in them. The horizontal cursors mark the matching position of three formant frequency values. They approximately equal 340, 1'850 and 3'505 Hz. Instead of the left spectrogram speaker's third 2'430 Hz formant, the right spectrogram speaker has the third formant in the region of 2'800 Hz.

To ensure high reliability of speaker identification with the speech signal distorted badly due to substantially irregular frequency response of audio channels that is different for the compared audio records, an embodiment of the method for speaker identification is proposed, the embodiment involving inverse filtering of the speech signals of the compared audio records prior to executing the above steps.

Before calculating the spectrograms and formant frequency values, the power spectrum of the signal of each audio record is subjected to inverse filtering. At this point, the time average spectrum is calculated for the spectrogram as a whole or its particular portions, and then, for each frequency, the original value of the spectrum power of the audio record signal is divided by inverse power value of the average spectrum for a given frequency. The inverse power value is the spectrum power value obtained by dividing one by this value.

The inverse filtering procedure can be performed not by division but by taking a logarithm and subtracting the corresponding spectra. In this case, before calculating the spectrograms and formant frequencies, the signal spectrum of each audio record is transformed into a spectrum logarithm, the time average spectrum logarithm is calculated for the audio record as a whole or its individual portions, and then the average spectrum power logarithm for each frequency is subtracted from the original signal spectrum power logarithm of the processed audio record.

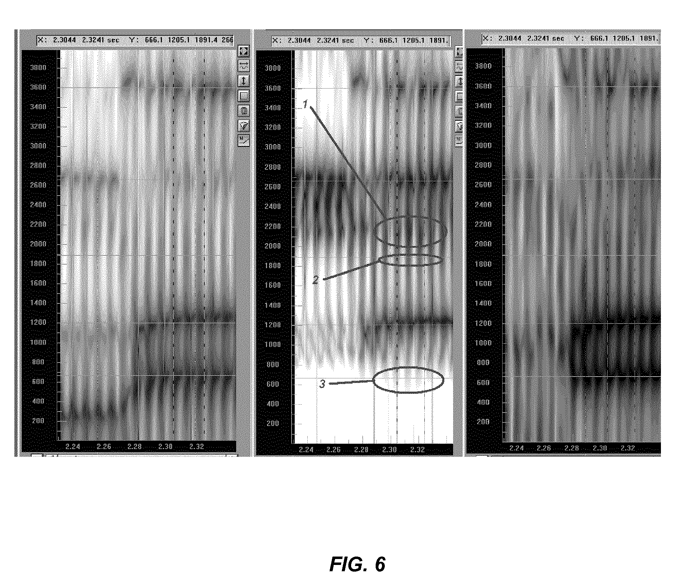

Figures 6-8 illustrate an example of the use of inverse filtering to determine the values of formant frequencies for the selected formant vector.

Figure 6 shows three spectrograms of the same speech signal (reference fragment with the [na] syllable):
- the left box spectrogram corresponds to the original speech signal, recorded through a highly sensitive microphone;
- the central box spectrogram corresponds to the same speech signal, recorded through a low-quality phone channel;
- the right box spectrogram corresponds to the same speech signal, recorded through a low-quality phone channel, after having been subjected to inverse filtering according to the proposed embodiment of the method.

In each spectrogram in Figure 6 the horizontal axis represents time in seconds from the beginning of the audio record, the vertical axis - frequency in Hz. The spectrogram blackening intensity is proportionate to the signal spectrum power at the corresponding point of time and frequency. The horizontal cursors mark the five low-frequency resonance frequency values of the speaker's vocal tract for the formant vector marked by the vertical cursors, in the original audio record.

In the central audio record, ovals with digits 2 and 3 mark the spectrum areas where there is no trace of the F1 and F3 formants, present in the original audio record.

The oval marked 1 shows a false formant frequency, which appears only on spectrogram 2 due to the influence of the low-quality telephone channel.

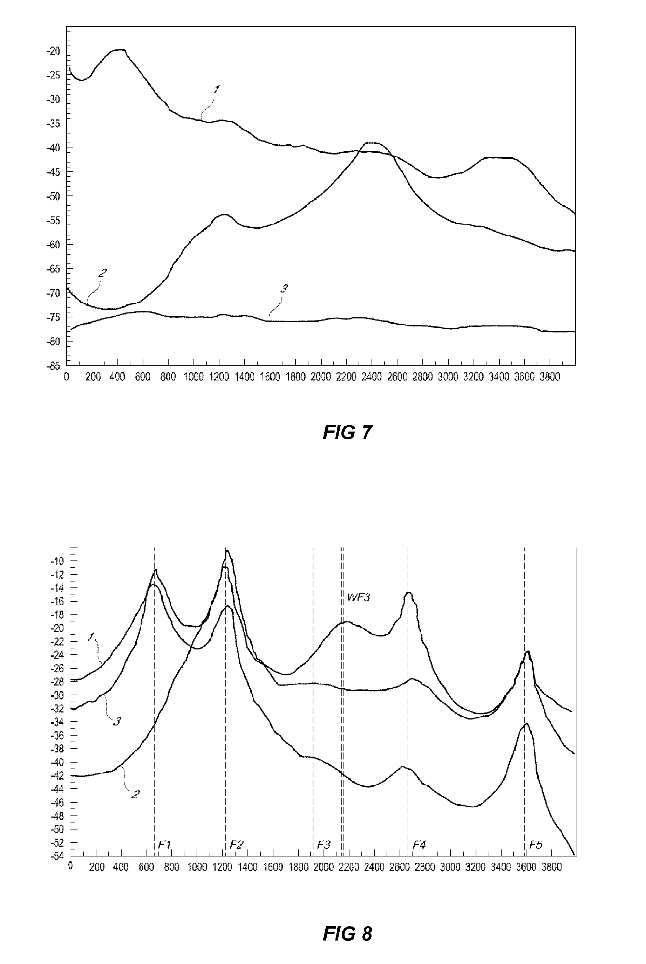

Figure 7 shows: curve (1) - average power spectrum of the original speech signal for the whole audio record, the spectrogram of which is shown in the left box of Figure 6; curve (2) - average power spectrum of the original speech signal for the whole audio record, the spectrogram of which is shown in the central box of Figure 6; curve (3) - average power spectrum of the original speech signal for the whole audio record, the spectrogram of which is shown in the right box of Figure 6.

Figure 8 shows the averaged spectra and marked formant frequencies for the formant vector, highlighted in the spectrograms in Figure 6. Curve (1) represents the average spectrum of the formant vector for the original spectrogram, shown in the left box in Figure 6, curve (2) is for the same audio record, passed through a low-quality phone channel (corresponds to the central box in Figure 6), curve (3) is for the audio record, passed through a low-quality phone channel and subjected to inverse filtering (right box in Figure 6). The vertical cursors mark F1, F2, F3, F4, and F5 formants, matching for the original audio record (left box in Figure 6) and the audio record after inverse filtering (right box in Figure 6). Formants F1 and F2 are not shown in curve 2. In curve 2, additional false WF3 formant is clearly visible, absent form this formant vector in the original audio record.

Thus, in the segment of the speech signal spectrum, recorded through a low-quality phone channel, in which there is no trace of F1 and F3 formants (ovals marked with numbers 2 and 3 in the central box spectrogram in Fig. 6), Figure 8 shows these F1 and F3 formants as present in the original audio record (curve 1) and in the audio record after inverse filtering (curve 3). They are not present in the audio record of the low-quality telephone channel (curve 2 in Figure 8). At the same time, audio record 2 shows a false WF3 formant.

These examples show that the proposed inverse filtering allows restoring the original formant structure of an audio record, broken when the audio record passes through low-quality communication channels.

The inventors have experimentally determined that inverse filtering performed both by division and by taking logarithms and subtracting the corresponding spectra gives practically the same results.

The proposed method can be implemented using the existing equipment.

## Claims

1. A method for identification of a speaker from an audio record of oral speech, the method comprising:
evaluating similarity between a first audio record of a speaker and a second, or sample, audio record by a match of formant frequencies in reference fragments of speech signal selected for comparison from the first audio record and from the second audio record,
and further comprising:
selecting reference fragments of speech signal from the first audio record and from the second audio record such that the reference fragments comprise formant trajectories of at least three formant frequencies;
for each reference fragment of the first audio record, selecting a reference fragment of the second audio record for comparison, such that the reference fragments to be compared have matching formant frequency values for at least two formant frequencies;
evaluating similarity of said reference fragments to be compared by comparing the remaining formant frequencies, wherein said reference fragments to be compared match if their remaining formant frequencies match within a predetermined deviation,
wherein similarity of the audio records is acknowledged if all the compared reference fragments match.

2. The method according to claim 1, wherein the formant frequencies in each of the selected reference fragments are calculated as average values over fixed duration time intervals in which the formant frequencies are relatively invariable.

3. The method according to claim 1, wherein reference fragments are selected and compared in which frequency values for the first two formants match, the frequency values for the first two formants being within a predetermined limit of typical variability of formant frequency values for the corresponding type of vowel phonemes in a given language.

4. The method according to claim 1, wherein at least two reference fragments of speech signal are selected for comparison from the audio records, the at least two reference fragments being related to sounds of a maximum difference articulation with maximum and minimum frequency values for a given audio record.

5. The method according to any of claims 1-4, wherein,
before calculating values of formant frequencies,
the power spectrum of the speech signal for each audio record is subjected to inverse filtering,
wherein the time average for each frequency component of the power spectrum is calculated, at least for particular fragments of the audio record, and then
the original value of the power spectrum of the signal of the audio record is divided by its inverse average value for each frequency component of the spectrum.

6. The method according to any of claims 1-4, wherein,
before calculating values of formant frequencies,
the power spectrum of the speech signal for each audio record is subjected to inverse filtering,
wherein the time average for each frequency component of the power spectrum is calculated, at least for individual fragments of the audio record, and then
the spectra are subject to a logarithm step, and the average value logarithm of the power spectrum of the signal of the audio record for each frequency component is subtracted from its original value logarithm.

## Patentansprüche

1. Verfahren zur Identifizierung eines Sprechers aufgrund einer Tonaufnahme gesprochener Sprache, wobei das Verfahren umfasst:
Bewertung der Ähnlichkeit zwischen einer ersten Tonaufnahme eines Sprechers und einer zweiten Tonaufnahme, oder Probe, durch Abgleichung von Formantfrequenzen in Referenzfragmenten von aus der ersten Tonaufnahme und aus der zweiten Tonaufnahme zum Vergleich ausgewählten Sprachsignalen,
zudem umfassend:
Auswählen der Referenzfragmente des Sprachsignals aus der ersten Tonaufnahme und aus der zweiten Tonaufnahme, so dass die Referenzfragmente Formantenverläufe von mindestens drei Formantfrequenzen aufweisen;
für jedes Referenzfragment der ersten Tonaufnahme, Auswählen eines Referenzfragments der zweiten Tonaufnahme zum Vergleich, so dass die zu vergleichenden Referenzfragmente übereinstimmende Formantfrequenzwerte für mindestens zwei Formantfrequenzen aufweisen;
Auswerten der Ähnlichkeit der besagten zu vergleichenden Referenzfragmente durch Vergleich der übrigen Formantfrequenzen, worin die besagten zu vergleichenden Referenzfragmente übereinstimmen, wenn deren übrigen Formantfrequenzen innerhalb einer vorbestimmten Abweichung übereinstimmen,
worin die Ähnlichkeit der Tonaufnahmen erkannt wird, wenn alle verglichenen Referenzfragmente übereinstimmen.

2. Verfahren gemäss Anspruch 1, worin die Formantfrequenzen in jedem der ausgewählten Referenzfragmente als Durchschnittswerte über Zeitintervalle festgelegter Dauer berechnet werden, worin die Formantfrequenzen relativ unveränderlich sind.

3. Verfahren gemäss Anspruch 1, worin Referenzfragmente ausgewählt und verglichen werden, worin Frequenzwerte für die erste zwei Formanten übereinstimmen, wobei die Frequenzwerte für die ersten zwei Formanten innerhalb eines vorbestimmten Grenzwertes von typischer Variabilität der Werte der Formantfrequenzen für den entsprechenden Typ von Vokalphonemen in einer gegebenen Sprache liegen.

4. Verfahren gemäss Anspruch 1, worin mindestens zwei Referenzfragmente eines Sprachsignals zum Vergleich aus den Tonaufnahmen ausgewählt werden, wobei die mindestens zwei Referenzfragmente mit Tönen einer Maximaldifferenzartikulation mit maximalen und minimalen Frequenzwerten für eine gegebene Tonaufnahme verknüpft sind.

5. Verfahren gemäss irgendeinem der Ansprüche 1-4, worin
bevor die Werte der Formantfrequenzen berechnet werden,
das Leistungsspektrum des Sprachsignals für jede Tonaufnahme einer Umkehrfiltration unterzogen wird,
worin die Durchschnittszeit für jede Frequenzkomponente des Leistungsspektrums berechnet wird, zumindest für gewisse Fragmente der Tonaufnahme, und dann
der Ursprungswert des Leistungsspektrums des Signals der Tonaufnahme durch seinen Umkehrdurchschnittswert für jede Frequenzkomponente des Spektrums geteilt wird.

6. Verfahren gemäss irgendeinem der Ansprüche 1-4, worin
bevor die Werte der Formantfrequenzen berechnet werden,
das Leistungsspektrum des Sprachsignals für jede Tonaufnahme einer Umkehrfiltration unterzogen wird,
worin die Durchschnittszeit für jede Frequenzkomponente des Leistungsspektrums berechnet wird, zumindest für individuelle Fragmente der Tonaufnahme, und dann
die Spektren einem Logarithmusschritt unterzogen werden und der Durchschnittlogarithmuswert des Leistungsspektrums des Signals der Tonaufnahme für jede Frequenzkomponente von seinem Ursprungswertlogarithmus abgezogen wird.

## Revendications

1. Procédé d'identification d'un locuteur à partir d'un enregistrement sonore de paroles prononcées, le procédé comprenant :
d'évaluer la similitude entre un premier enregistrement sonore d'un locuteur et un deuxième enregistrement sonore, ou échantillon, par une concordance de fréquences de formants dans des fragments de référence de signal vocal sélectionné pour comparaison à partir du premier enregistrement sonore et à partir du deuxième enregistrement sonore,
et comprenant en outre
de sélectionner des fragments de référence de signal vocal à partir du premier enregistrement sonore et à partir du deuxième enregistrement sonore de telle sorte que les fragments de référence comprennent des trajectoires de formants d'au moins trois fréquences de formants ;
pour chaque fragment de référence du premier enregistrement sonore, de sélectionner un fragment de référence du deuxième enregistrement sonore pour comparaison, de telle sorte que les fragments de référence à comparer possèdent des valeurs de fréquences de formants correspondantes pour au moins deux fréquences de formant ;
d'évaluer la similitude desdits fragments de référence à comparer en comparant les fréquences de formant restantes, lesdits fragments de référence à comparer étant en concordance si leurs fréquences de formant restantes correspondent à une déviation prédéterminée,
la similitude des enregistrements sonores étant constatée si tous les fragments de référence concordent.

2. Procédé selon la revendication 1, dans lequel les fréquences de formant dans chacun des fragments de référence sélectionnés sont calculées en tant que valeurs moyennes pendant des intervalles de temps de durée fixe durant lesquelles les fréquences de formant sont relativement invariables.

3. Procédé selon la revendication 1, dans lequel des fragments de référence sont sélectionnés et comparés dans lesquels les valeurs de fréquence pour les deux premiers formants concordent, les valeurs de fréquence pour les deux premiers formants se situant dans une limite prédéterminée de variabilité typique de valeurs de fréquences de formant pour le type de phonèmes voyelles correspondantes dans une langue donnée.

4. Procédé selon la revendication 1, dans lequel au moins deux fragments de référence d'un signal vocal sont sélectionnés pour comparaison à partir des enregistrements sonores, les au moins deux fragments de référence étant liés aux sons d'une articulation de différence maximale avec des valeurs de fréquence maximales et minimales pour un enregistrement sonore donné.

5. Procédé selon l'une quelconque des revendications 1-4, dans lequel
avant de calculer les valeurs de fréquences de formant,
le spectre en puissance du signal vocal pour chaque enregistrement sonore est soumis à un filtrage inverse,
le temps moyen pour chaque composante de fréquence du spectre en puissance étant calculé, au moins pour des fragments particuliers de l'enregistrement sonore, et ensuite
la valeur originale du spectre en puissance du signal de l'enregistrement sonore est divisé par sa valeur moyenne inverse pour chaque composante de fréquence du spectre.

6. Procédé selon l'une quelconque des revendications 1-4, dans lequel
avant de calculer les valeurs de fréquences de formant,
le spectre en puissance du signal vocal pour chaque enregistrement sonore est soumis à un filtrage inverse,
le temps moyen pour chaque composante de fréquence du spectre en puissance étant calculé, au moins pour des fragments individuels de l'enregistrement sonore, et ensuite
les spectres sont soumis à une étape logarithmique et le logarithme de la valeur moyenne du spectre en puissance du signale de l'enregistrement sonore pour chaque composante de fréquence est déduite du logarithme de sa valeur originale.
